(19) Europäisches Patentamt / European Patent Office / Office européen des brevets

(11) **EP 2 558 620 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: **11725604.0**

(22) Anmeldetag: **14.04.2011**

(51) Int Cl.:
*C25D 3/00* *(2006.01)*      *C25D 3/38* *(2006.01)*
*C25D 3/40* *(2006.01)*      *C25D 7/12* *(2006.01)*
*F16C 33/12* *(2006.01)*

(86) Internationale Anmeldenummer:
**PCT/AT2011/000183**

(87) Internationale Veröffentlichungsnummer:
**WO 2011/127511 (20.10.2011 Gazette 2011/42)**

(54) **ANTIFRETTINGSCHICHT**

ANTIWEAR LAYER

COUCHE ANTI-USURE DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2010 AT 6012010**

(43) Veröffentlichungstag der Anmeldung:
**20.02.2013 Patentblatt 2013/08**

(73) Patentinhaber: **Miba Gleitlager GmbH**
**4663 Laakirchen (AT)**

(72) Erfinder: **ZIDAR, Jakob**
**A-4813 Altmünster (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
DE-A1- 10 032 624    DE-A1-102004 038 191
GB-A- 2 438 977    JP-A- 6 174 086

• IBANEZ A ET AL: "Mechanical and structural properties of electrodeposited copper and their relation with the electrodeposition parameters", SURFACE AND COATINGS TECHNOLOGY, ELSEVIER, AMSTERDAM, NL, Bd. 191, Nr. 1, 1. Februar 2005 (2005-02-01), Seiten 7-16, XP004653571, ISSN: 0257-8972, DOI: DOI: 10.1016/J.SURFCOAT.2004.05.001

**Beschreibung**

Die Erfindung betrifft eine Antifrettingschicht für ein Mehrschichtgleitlager bestehend aus einer Kupferlegierung, die neben Kupfer als Hauptlegierungselement zumindest ein Element aus der Gruppe Germanium, Zinn, Indium, Zink, Nickel, Kobalt, Wismut, Blei, Silber, Anti-mon sowie aus der Herstellung stammende unvermeidbare Verunreinigungen enthält, wobei der Summenanteil dieser Legierungselemente mindestens 1 Gew.-% und maximal 30 Gew.-% beträgt, und wobei in der Kupferlegierung aus Kupfer und dem zumindest einem Element gebildete Kupfer-Mischkristall-Körner vorliegen, weiters ein Mehrschichtgleitlager mit einer, einem zum lagernden Element zuwendbaren Vorderseite und einer dieser gegenüberliegenden Rückseite, umfassend eine Stützschicht, eine auf der Vorderseite angeordnete Gleitschicht sowie eine auf der Rückseite angeordnete Antifrettingschicht, sowie ein Verfahren zur galvanischen Abscheidung dieser Antifrettingschicht auf dem Rücken einer Stützschicht eines Mehrschichtgleitlager, wobei die Antifrettingschicht aus einer Kupferlegierung hergestellt wird, die neben Kupfer als Hauptlegierungselement zumindest ein Element aus der Gruppe Germanium, Zinn, Indium, Zink, Nickel, Kobalt, Wismut, Blei, Silber, Antimon sowie aus der Herstellung stammende unvermeidbare Verunreinigungen enthält, wobei der Summenanteile dieser Legierungselemente mindestens 1 Gew.-% und maximal 30 Gew.-% beträgt und in Form von Salzen im Elektrolyt eingesetzt werden, wobei die Abscheidung der Antifrettingschicht bei einer Temperatur unterhalb von 85 °C und bei einer maximalen Stromdichte von 6 A/dm$^2$ durchgeführt wird.

Die Rückenbeschichtung eines Gleitlagers mit einer Antifrettingschicht ist bereits aus dem Stand der Technik bekannt. Durch diese Beschichtung soll die Reibverschweißung bzw. Reibkorrosion und damit das "Festfressen" des Gleitlagers im Lagergehäuse aufgrund ungewollter Relativbewegungen der Bauteile zueinander vermieden werden. Als Folge der Reibkorrosion entstehen häufig auch Reibdauerbrüche. Die Reibkorrosion wird wesentlich auch bestimmt durch die Werkstoffpaarung. Harte Werkstoffe bzw. Bauelemente mit harten Oberflächenschichten neigen eher zu einem Abtrag durch Reibkorrosion als weiche Werkstoffe, die mehr zum Festfressen tendieren. Im letzteren Fall ist dann zwar die Relativbewegung unterbunden, allerdings liegt auch dann ein Schaden vor.

Um diesem Problem zu begegnen wurden im Stand der Technik bereits unterschiedlichste Werkstoffe zur Herstellung einer Antifrettingschicht beschrieben. So beschreibt z.B. die von der Anmelderin stammende AT 506 641 A1 eine Silberlegierung für diese Verwendung. Aus der ebenfalls von der Anmelderin stammenden AT 399 544 B ist eine Korrosionsschutzschicht aus einer Sn-Legierung bekannt. Ni-, Cr- bzw. Co-Legierungen für Antifrettingschichten sind aus der GB 2315301 A1 bekannt. Gemäß der WO 02/48563 A1 wird eine Zinnbronze als Antifrettingschicht eingesetzt. Eine als Antifrettingschicht galvanisch auf Stahl abgeschiedene Cu-Sn-Legierung mit einem Zinnanteil zwischen 10 % und 15 % ist aus der GB 556,248 A bzw. der GB 554,355 A bekannt.

Es ist die Aufgabe der Erfindung ein verbessertes Mehrschichtgleitlager, insbesondere eine verbesserte Antifrettingschicht auf Kupferbasis, anzugeben.

Diese Aufgabe wird gelöst jeweils unabhängig mit der eingangs genannten Antifrettingschicht, bei der die Kupfer-Mischkristall-Körner in der Art orientiert sind, dass ein Orientierungsindex M {hkl} gemäß der Formel

$$M\{hkl\} = \frac{I\{hkl\}\sum I^0\{hkl\}}{I^0\{hkl\}\sum I\{hkl\}}$$

jede der Netzebenenscharen {hkl} einen Wert von kleiner 3,0 aufweist, wobei I{hkl} die Röntgenbeugungsintensitäten für die {hkl} Netzebenen der Antifrettingschicht und I$^0${hkl} die Röntgenbeugungsintensitäten der völlig unorientierten Kupfer-Pulverprobe (ICDD PDF 00-004-0836) darstellen, weiters durch das die Antifrettingschicht aufweisende Mehrschichtgleitlager, sowie durch das eingangs genannte Verfahren, bei dem der Elektrolyt neben den Salzen für die abzuscheidenden Metalle auch organische Verbindungen ausgewählt aus einer Gruppe umfassend Polycarbonsäuresalze, Naphthol, Naphtholderivate, Thioverbindungen enthält, gelöst.

Zur Berechnung des Orientierungsindexes werden dabei auf Grund ihrer relativ höheren Intensität nur die Reflexe {111}, {200}, {220} und {311} herangezogen. Die Messung der Röntgenbeugungsintensität erfolgt in der Bragg-Brentano-Diffraktometeranordnung mit Cu-Kα-Strahlung, wobei Netzebenen beugen, die parallel zur Oberfläche liegen. Durch die Bildung von Substitutionsmischkristallen und die entsprechende Änderung der Gitterparameter können die Positionen der Beugungsreflexe, entsprechend der Vengardschen Regel, um 0° bis 5°, meist 0,2° bis 2°, verschoben sein. Weiters muss die Summenbildung der Beugungsintensitäten ΣI{hkl} bzw. ΣI$^0${hkl} über denselben Bereich erfolgen.

Die Berechnung des Orientierungsindexes erfolgt zweckmäßigerweise über die {111}, {200}, {220} und {311} Reflexe also über einen 2Theta-Bereich von ca. 43 - 90°, da diese im Vergleich zu den folgenden {222}, {331} und {420} intensiver und daher genauer bestimmbar sind. Für Vergleichszwecke muss daher die Auswertung der Röntgenbeugungsintensitäten für dieselben Reflexe erfolgen, die unter gleichen Bedingungen erhalten wurden.

Auf der Suche nach einer Antifrettingschicht mit verbesserten Eigenschaften hat die Anmelderin neben den bereits voranstehend erwähnten Silberlegierungsschichten unter anderem auch Kupferbasislegierungen mit einem Gehalt an zumindest einem weiteren Legierungselement, wie z.B. Zinn, untersucht und überraschend festgestellt, dass manche dieser Kupferbasislegierungen deutlich bessere Verschleißeigenschaften und/oder eine deutlich höhere Dauerfestigkeit, jedenfalls aber einen verbesserten Schutz vor Schäden durch Fretting aufwiesen als andere.

Durch Untersuchungen der Struktur dieser Kupferbasislegierungen mittels Röntgendiffraktometrie konnte aus den Beugungsmustern festgestellt werden, dass die Kupfer-Mischkristall-Körner in diesen Kupferbasislegierungen eine deutliche Orientierung von symmetriebedingt äquivalenten Ebenen in eine Richtung aufwiesen. Es wird vermutet, dass die besseren Eigenschaften bedingt sind durch die orientierten Kupfer-Mischkristall-Körner, da Kupferbasislegierungen mit denselben Zusammensetzungen aber anderen Orientierungen der Kupfer-Mischkristall-Körner schlechtere Eigenschaften aufwiesen.

Vorzugsweise ist der Wert des Orientierungsindex $M\{hkl\}$ jeder Netzebenenschar gemäß Miller Index kleiner 2,75, insbesondere kleiner 2,5.

Dieser Effekt der verbesserten Verschleißeigenschaften trat insbesondere auf, wenn zumindest einer der folgenden Bedingungen erfüllt ist:

- der Orientierungsindex des $\{220\}$ Reflexes unterschreitet den Wert 1,0 und/oder

- die Röntgenbeugungsintensität der $\{200\}$-Netzebenen beträgt zwischen 50 % und 200 % der Röntgenbeugungsintensität der $\{111\}$-Netzebenen und/oder

- die Summe der Röntgenbeugungsintensität von $I\{111\}$ und $I\{200\}$ beträgt zumindest 70%, bevorzugt zumindest 80%, der gesamten Röntgenbeugungsintensität und/oder

- die Röntgenbeugungsintensität $I\{111\}$ beträgt zumindest 70%, bevorzugt zumindest 85%, der gesamten Röntgenbeugungsintensität.

Nach einer Ausführungsvariante der Antifrettingschicht ist vorgesehen, dass der Zinngehalt zwischen 5 Gew.-% und 25 Gew.-%, bevorzugt zwischen 8 Gew.-% und 19 Gew.-%, insbesondere zwischen 10 Gew.-% und 16 Gew.-%, beträgt. Es wird damit die Härte der Antifrettingschicht erhöht, wodurch einerseits die Neigung zum "Festfressen" verringert wird und andererseits damit auch die Verschleißbeständigkeit weiter erhöht wird. Oberhalb von 25 Gew.-% bilden sich überwiegend intermetallische Phasen, die sehr spröde sind, wodurch die Verschleißbeständigkeit wieder sinkt. Unterhalb von 5 Gew.-% sind hingegen geringfügige Verbesserungen zu beobachten, die für sich allein allerdings nicht die gewünschten Verbesserungen erbrachten.

Der Zinkgehalt kann zwischen 0,5 Gew.-% und 25 Gew.-%, bevorzugt zwischen 1 Gew.-% und 5 Gew.-%, betragen. Es wird damit die Dauerstandsfestigkeit und die Dehnbarkeit der Antifrettingschicht verbessert. Zudem wird die Korrosionsbeständigkeit der Kupferlegierung verbessert. Oberhalb von 25 Gew.-% verringert sich der Schutz vor Fretting. Unterhalb von 0,5 Gew.-% konnte keine wesentliche Verbesserung der Eigenschaften der Kupferlegierung beobachtet werden.

Es ist weiters möglich, dass die Antifrettingschicht einen Gehalt an einem oder mehreren der Elemente Germanium, Indium, Zink, Nickel, Kobalt, Wismut, Blei und Antimon enthält, wobei deren Summenanteil zwischen 0,2 Gew.-% und 20 Gew.-% beträgt. Es ist damit eine weitere Anpassung der Antifrettingschicht an hochbeanspruchte Lager möglich.

Durch Nickel und Kobalt wird die Korrosionsbeständigkeit der Antifrettingschicht verbessert.

Zur Verbesserung der Gleitfähigkeit der Antifrettingschicht kann neben der Kupfer-Mischkristallphase eine gleitfähige Weichphase in der Matrix vorliegen, die insbesondere durch Blei, Bismut, Silber oder zumindest einen Festschmierstoff wie $MoS_2$, Graphit, $WS_2$ etc gebildet wird.

Germanium, Indium und Antimon verbessern die Anpassungsfähigkeit und/oder die Korrosionsfestigkeit der Antifrettingschicht an das das Gleitlager aufnehmende Gehäuse.

Gemäß einer Ausführungsvariante der Antifrettingschicht ist vorgesehen, dass diese eine Schichtdicke zwischen 2 $\mu$m und 100 $\mu$m, bevorzugt zwischen 3 $\mu$m und 30 $\mu$m, insbesondere zwischen 4 $\mu$m und 15 $\mu$m aufweist. Durch Einhaltung der unteren Grenze von 2 $\mu$m für die Schichtdicke wird erreicht, dass die Antifrettingschicht auch nach Verschleiß der Rauheitsspitzen eine zusammenhängende Schicht bildet. Bei Schichtdicken von über 100 $\mu$m wurde eine verschlechterte Haftung der Antifrettingschicht am Untergrund durch Spannungen am Interface beobachtet.

Die Antifrettingschicht weist bevorzugt eine Mikrohärte nach Vickers bei einer Prüflast von 3 Pond zwischen HV 200 und HV 500, bevorzugt zwischen HV 230 und HV 400, insbesondere zwischen HV 250 und HV 350, auf, wodurch der Abrieb aufgrund von Mikrobewegungen des Gleitlagers im Gehäuse reduziert werden kann und somit die Reibkorrosion der Antifrettingschicht weiter reduziert werden kann. Über 500 HV ist die plastische Verformbarkeit meist so gering, dass einwirkende Kräfte lokal zur Rissbildung und zu Brüchen der Schicht führen. Unter 200 HV wird die Verschleißfestigkeit nicht in dem gewünschten Maße erreicht.

Vorzugsweise weisen die Kupfer-Mischkristall-Körner in der Antifrettingschicht eine Korngröße von größer 5 nm, bevorzugt von größer 10 nm, insbesondere von größer 50 nm, aufweisen. Es ist damit der kristalline Charakter der Kupferbasislegierung stärker ausgeprägt, wodurch in der Folge auch die von der voranstehend beschriebenen Orientierung abhängigen Eigenschaften stärker zu Ausdruck kommen.

Gemäß einer Ausführungsvariante ist die Antifrettingschicht bevorzugt im Wesentlichen frei von intermetallischen Phasen und erscheint in der XRD-Messung als Mischkristall mit Kupfer-Kristallgitter, wobei gemäß einer bevorzugten Ausführungsvariante diese aus Kupfer-Mischkristallen mit einer Gitterkonstante zwischen 0,3630 nm und 0,3750 nm besteht. Es wird dadurch die Ausbildung der bevorzugten Ausrichtung der Kupfer-Mischkristall-Körner in der Schicht aus der Kupferbasislegierung unterstützt bzw. zumindest nicht behindert, sodass die Antifrettingschicht ein homogeneres Eigenschaftsprofil aufweist.

Gemäß einer Ausführungsvariante des Mehrschichtgleitlagers ist vorgesehen, dass die Antifrettingschicht eine Schichtdicke von mindestens 50 %, insbesondere mindestens 150 %, und maximal 1000 %, bevorzugt maximal 300 %, der Rauhigkeit Rz der Stützschicht bzw. einer gegebenenfalls zwischen der Stützschicht und der Antifrettingschicht angeordneten Zwischenschicht aufweist. Es wird damit ein "Einebnungseffekt" der unter der Antifrettingschicht liegenden Schicht erreicht, wobei gleichzeitig durch die vorhandene Rauhigkeit eine bessere Haftung zwischen dieser Schicht und der Antifrettingschicht erzielt werden kann. Insbesondere wird damit ein Abrieb, der durch Profilspitzen des Rauhigkeitsprofils der unterhalb der Antifrettingschicht angeordneten Schicht entstehen könnte, besser vermieden.

Zur Erhöhung der Anpassungsfähigkeit des Mehrschichtgleitlagers an eine dieses aufnehmende Oberfläche des Gehäuses kann vorgesehen werden, dass die Antifrettingschicht eine Beschichtung aufweist, die weicher ist als die Antifrettingschicht. Bevorzugt besteht dabei diese Beschichtung aus einem Werkstoff besteht, der ausgewählt ist aus einer Gruppe umfassend Zinn, Blei, Wismut, polymerbasierte Gleitlacke.

Zum besseren Verständnis der Erfindung wird diese anhand der nachfolgenden Figuren näher erläutert.

Es zeigen teilweise in schematisch vereinfachter Darstellung:

Fig. 1          ein Mehrschichtgleitlager in Form einer Gleitlagerhalbschale in Seitenansicht;

Fig. 2 bis 7    die Röntgendiffraktogramme von erfindungsgemäßen Antifrettingschichten;

Fig. 8 und 9    die Röntgendiffraktogramme von Antifrettingschichten gemäß GB 556, 248 A;

Fig. 10         das Röntgendiffraktogramm einer Antifrettingschicht gemäß WO 02/48563 A1;

Fig. 11         ein Diagramm mit den Orientierungsindizes verschiedener Antifrettingschichten.

Einführend sei festgehalten, dass in der Beschreibung gewählten Lageangaben, wie z.B. oben, unten, seitlich usw. auf die unmittelbar beschriebene sowie dargestellte Figur bezogen sind und sind diese bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfindungsgemäße Lösungen darstellen.

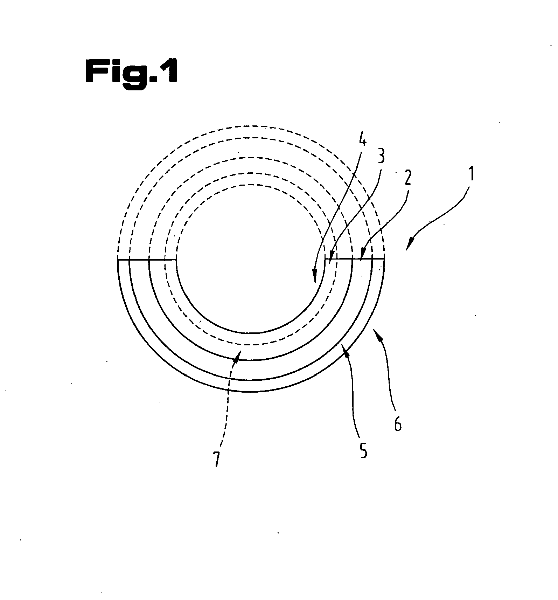

Fig. 1 zeigt ein Mehrschichtgleitlager 1 in Form einer Gleitlagerhalbschale. Dargestellt ist eine dreischichtige Variante des Mehrschichtgleitlagers 1, bestehend aus einer Stützschicht 2, einer Gleitschicht 3, die auf einer Vorderseite 4 des Mehrschichtgleitlagers 2, die einem zu lagernden Bauteil zuwendbar ist angeordnet ist, und einer Antifrettingschicht 5, die auf einer Rückseite 6 des Mehrschichtgleitlagers 1 und auf der Stützschicht 2 angeordnet ist. Gegebenenfalls kann eine Lagermetallschicht 7 zwischen der Gleitschicht 4 und der Stützschicht 2 angeordnet sein, wie dies in Fig. 1 strichliert angedeutet ist.

Der prinzipielle Aufbau derartiger Mehrschichtgleitlager 1, wie sie z.B. in Verbrennungskraftmaschinen Verwendung finden, ist aus dem Stand der Technik bekannt, sodass sich weitere Ausführungen hierzu erübrigen. Es sei jedoch erwähnt, dass weitere Schichten angeordnet werden können, also beispielsweise zwischen der Gleitschicht 4 und der Lagermetallschicht 3 und/oder zwischen der Antifrettingschicht 5 und der Stützschicht 2 eine Haftvermittlerschicht und/oder eine Diffusionssperrschicht, ebenso kann zwischen der Lagermetallschicht 3 und der Stützschicht 2 eine Haftvermittlerschicht angeordnet werden.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Daneben besteht im Rahmen der Erfindung die Möglichkeit, dass auf die Lagermetallschicht 3 verzichtet wird, sodass die Gleitschicht 4 entweder direkt oder unter Zwischenanordnung eines Haftvermittlers und/oder einer Diffusionssperrschicht auf die Stützschicht 2 aufgebracht sein kann.

Die Stützmetallschicht 2 besteht bevorzugt aus Stahl, kann aber auch aus einem Werkstoff, der dem Mehrschichtgleitlager 1 die erforderliche Strukturfestigkeit verleiht, bestehen. Derartige Werkstoffe sind aus dem Stand der Technik bekannt.

Für die Lagermetallschicht 3 bzw. die Gleitschicht 4 sowie die Zwischenschichten können die aus dem einschlägigen Stand der Technik bekannten Legierungen bzw. Werkstoffe verwendet werden, und sei diesbezüglich darauf verwiesen.

Erfindungsgemäß besteht die Antifrettingschicht 5 aus einer Kupferbasislegierung, die zumindest ein Element aus der Gruppe Germanium, Zinn, Indium, Zink, Nickel, Kobalt, Wismut, Blei, Silber, Antimon sowie aus der Herstellung stammende unvermeidbare Verunreinigungen enthält, wobei der Summenanteile dieser Legierungselemente mindesten 1 Gew.-% und maximal 30 Gew.-% beträgt, und wobei in der Kupferlegierung aus Kupfer und dem zumindest einem Element gebildete Kupfer-Mischkristall-Körner vorliegen.

Der Zinngehalt kann zwischen 5 Gew.-% und 25 Gew.-%, bevorzugt zwischen 8 Gew.-% und 19 Gew.-%, insbesondere zwischen 10 Gew.-% und 16 Gew.-%, betragen.

Der Zinkgehalt kann zwischen 0,5 Gew.-% und 25 Gew.-%, bevorzugt zwischen 1 Gew.-% und 5 Gew.-%, betragen.

Der Gehalt an Germanium kann zwischen 3 Gew.-% und 15 Gew.-%, vorzugsweise zwischen 4 Gew.-% und 10 Gew.-%, betragen.

Der Gehalt an Indium kann zwischen 0,2 Gew.-% und 20 Gew.-%, vorzugsweise zwischen 1 Gew.-% und 5 Gew.-%, insbesondere zwischen 2 Gew.-% und 4 Gew.-%, betragen.

Der Gehalt an Nickel kann zwischen 0,2 Gew.-% und 8 Gew.-%, vorzugsweise zwischen 0,5 Gew.-% und 5 Gew.-%, insbesondere zwischen 1 Gew.-% und 3 Gew.-%, betragen.

Der Gehalt an Kobalt kann zwischen 0,2 Gew.-% und 8 Gew.-%, vorzugsweise zwischen 0,5 Gew.-% und 5 Gew.-%, insbesondere zwischen 1 Gew.-% und 3 Gew.-%, betragen.

Der Gehalt an Bismut kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Gehalt an Blei kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Gehalt an Antimon kann zwischen 0,2 Gew.-% und 15 Gew.-%, vorzugsweise zwischen 0,2 Gew.-% und 10 Gew.-%, insbesondere zwischen 1 Gew.-% und 5 Gew.-%, betragen.

Der Anteil an Silber in der Kupferbasislegierung kann zwischen 1 Gew.-% und 20 Gew.-%, bevorzugt zwischen 2 Gew.-% und 10 Gew.-%, betragen.

Vorzugsweise beträgt der Gehalt an einem oder mehreren der Elemente Germanium, Indium, Zink, Nickel, Kobalt, Wismut, Blei, Silber und Antimon in Summe zwischen 0,2 Gew.-% und 20 Gew.-%.

Durch Zink, Indium, Germanium und Sb wird weiters die Neigung des Kupferwerkstoffes mit dem Stahl zu verschweißen vermindert. Die Anmelderin vermutet, dass einerseits die gegenseitige Löslichkeit, also des Gehäusewerkstoffes in dem Beschichtungsmaterial und umgekehrt, und damit ein Materialübertrag reduziert, die Korrosionsfestigkeit und mechanische Widerstandsfähigkeit gegen Verschleiß und Ermüdung durch Bildung eines Substitutionsmischkristalls verbessert und dass durch die Legierungspartner die Bildung von dünnen fest haftenden, die Oberflächen von einander trennenden, Oxidschichten und/oder Reaktionsschichten mit Öladditiven erleichtert wird.

Durch Kombinationen dieser Elemente können die Eigenschaften der Beschichtung gezielt eingestellt werden bzw. auf den jeweiligen Anwendungsfall maßgeschneidert werden.

Es wurde dabei beobachtet, dass unter einem gewissen Gehalt der Effekt zu gering ist, über einem gewissen Wert und insbesondere über dem Summenwert von 30 Gew.-% sich große Mengen harter, spröder intermetallischer Phasen bilden, die sich negativ auf die Antifrettingschicht auswirken.

So wird beispielsweise eine Cu-Sn oder Cu-Ge Legierung durch Zusatz von 1 Gew.-% bis 25 Gew.-% Zn oder 1 Gew.-% bis 20 Gew.-% Indium deutlich unempfindlicher gegen den korrosiven Angriff, insbesondere schwefelhaltiger, Öladditive.

Eine Cu-Al Legierung wird durch Zusatz von 0,2 Gew.-% bis 15 Gew.-% Antimon deutlich verschleißfester, da ein Teil der Legierungselemente als feindisperse AlSb-Hartphase ausgeschieden wird.

Durch Zulegieren von Nickel und/oder Kobalt kann die mechanische Festigkeit der Beschichtung und deren Korrosionsbeständigkeit stark erhöht werden. Insbesondere durch Nickel wird auch die Verformbarkeit verbessert. Leider wird durch diese Elemente die Verschweißneigung mit dem Gehäusematerial erhöht. Dieser Effekt wurde besonders bei Gehalten über 5 Gew.-%, insbesondere über 10 Gew.-%, beobachtet.

Durch Zulegieren eines oder mehrerer Elemente aus der Gruppe Blei, Wismut und Silber oder durch Zusatz von Festschmierstoffen wie Graphit, $MoS_2$, $WS_2$ wird eine weitere Phase in das Gefüge eingebracht, die besonders gute Gleiteigenschaften aufweist. Dadurch kann eine Schädigung durch Fretting weiter vermindert werden oder eine Schädigung unter extremen Betriebszuständen (vergleichbar mit den Notlaufeigenschaften eines Lagermetalls) reduziert werden.

Blei, Wismut und Festschmierstoffe sind besonders weiche Materialien, die potenziell die Belastbarkeit der Beschichtung schwächen könnten, daher ist ihr Gehalt nach oben zu begrenzen.

Silber wird von vielen, insbesondere schwefelhaltigen Öladditiven, stark angegriffen. Dieser unerwünschte Effekt tritt besonders ausgeprägt bei Gehalten über 20 Gew.-% auf.

Diese Kupferbasislegierungen werden bevorzugt galvanisch auf der Rückseite 6 auf dem jeweiligen Substrat, also beispielsweise der Stützschicht 2, abgeschieden. Der Elektrolyt hierfür kann cyanidhältig oder bevorzugt cyanidfrei sind. Bevorzugte Parameter für die Abscheidung sowie bevorzugte Badzusammensetzungen sind in den folgenden Beispielen wiedergegeben.

Beispiel 1: cyanidhältiger Elektrolyt

Kupfer (I)...............0,25 mol/l- 0,35 mol/l

Zinn (IV)...............0,10 mol/l- 0,20 mol/l

Freies Cyanid.........0,30 mol/l- 0,45 mol/l

Freie Alkalität.........0,20 mol/l- 0,30 mol/l

Tartrat...................0,10 mol/l- 0,20 mol/l

Additiv....................0,5 g/l- 5 g/l

Temperatur............55 °C - 65 °C

Stromdichte.............1 A/dm$^2$ - 4 A/dm$^2$

Beispiel 2: cyanidfreier Elektrolyt auf Methansulfonsäure- oder Tetrafluoroborsäurebasis

Kupfer (II).............0,25 mol/l- 0,35 mol/l

Zinn (II)...............0,10 mol/l- 0,20 mol/l

Freie Säure............0,8 mol/l- 2 mol/l

Additiv....................5 g/l-50 g/l

Temperatur..............20 °C - 30 °C

Stromdichte...............0,5 A/dm$^2$ - 3 A/dm$^2$

Beispiel 3: cyanidfreier Elektrolyt auf Pyrophosphat- oder Phosphonatbasis

Kupfer (II).............0,10 mol/l- 0,40 mol/l

Zinn (II)...............0,05 mol/l- 0,50 mol/l

pH-Wert................8 - 10

Additiv....................0,5 g/l- 50 g/l

Temperatur..............40 °C - 80 °C

Stromdichte...............0,5 A/dm$^2$ - 5 A/dm$^2$

In der bevorzugten Ausführung des Elektrolyts enthält dieser neben den Salzen für die abzuscheidenden Metalle auch organische Verbindungen. Insbesondere sind dies im Falle cyanidischer Elektrolyte Polycarbonsäuresalze wie Citrat oder Tartrat, im Falle der nicht cyanidischen sauren Elektrolyte Naphthol oder Naphtholderivate oder Thioverbindungen. Dadurch wird erreicht, dass die erfindungsgemäße Ausrichtung über einen weiteren Bereich an Badparametem erhalten wird.

Folgende Salze können zur Abscheidung der Metalle verwendet werden:

Kupfer kann als Kupfer(II)tetrafluoroborat, Kupfer(II)methansulfonat, Kupfer(II)sulfat, Kupfer(II)pyrophosphat, Kupfer(I)cyanid, Kupfersalze von Hydroxy- und/oder Aminophosphonsäuren eingesetzt werden. Generell kann die Konzentration an Kupfer im Elektrolyt zwischen 0,05 mol/l und 1 mol/l betragen.

Zinn kann als Zinn(II)tetrafluöroborat, Zinn(II)methansulfonat, Zinn(II)sulfat, Zinn(II)pyrophosphat, Natriumstannat, Kaliumstannat, Zinn(II)salze von Hydroxy- und/oder Aminophosphonsäuren eingesetzt werden. Generell kann die Konzentration an Zinn im Elektrolyt bis zu 0,5 mol/l betragen.

Zink kann als Zink(II)tetrafluoroborat, Zink(II)methansulfonat, Zink(II)sulfat, Zink(II)pyrophosphat, Zinkoxid, Zinkcyanid, Zink(II)salze von Hydroxy- und/oder Aminophosphonsäuren eingesetzt werden. Generell kann die Konzentration an Zink im Elektrolyt bis zu 0,5 mol/l betragen.

Germanium kann als Germaniumoxid oder Natrium- oder Kaliumgermanat eingesetzt werden. Generell kann die Konzentration an Germanium im Elektrolyt bis zu 0,5 mol/l betragen.

Indium kann als Indiumoxid, Indiumcyanid, Indiumsulfat, Indiumfluoroborat, Indiummethansulfonat eingesetzt werden. Generell kann die Konzentration an Indium im Elektrolyt bis zu 0,5, mol/l betragen.

Nickel kann als Nickel(II)tetrafluoroborat, Nickel(II)methansulfonat, Nickel(II)sulfat, Ammonium-Nickel-Sulfat, Nickel(II)chlorid, Nickel(II)pyrophosphat, Nickel(II)oxid eingesetzt werden. Generell kann die Konzentration an Nickel im Elektrolyt bis zu 1 mol/l betragen.

Cobalt kann in der gleichen Form und Konzentration wie Nickel eingesetzt werden.

Wismut kann als Wismuttrifluorid, Wismut(III)methansulfonat, Wismut(III)sulfat, Wismut(III)pyrophosphat, Wismutoxid, Natrium- oder Kaliumbismutat eingesetzt werden. Generell kann die Konzentration an Wismut im Elektrolyt bis zu 0,5 mol/l betragen.

Blei kann als Blei(II)tetrafluoroborat, Blei(II)methansulfonat, Blei(II)pyrophosphat, Bleiacetat, Blei(II)oxid, Natrium- oder Kaliumplumbat eingesetzt werden. Generell kann die Konzentration an Blei im Elektrolyt bis zu 0,3 mol/l betragen.

Silber kann als Cyanid, Alkalisilbercyanid, Silbermethansulfonat, Silbernitrat eingesetzt werden. Generell kann die Konzentration an Antimon im Elektrolyt bis zu 0,5 mol/l betragen.

Antimon kann als Antimon(III)tetrafluoroborat, Antimontrifluorid, Antimon(III)oxid, Kaliumantimontartrat eingesetzt werden. Generell kann die Konzentration an Antimon im Elektrolyt bis zu 0,2 mol/l betragen.

Mögliche Stabilisatoren bzw. Grundelektrolyte, Leitsalze oder Komplexbildner sind: Alkalicyanide, Alkalihydroxide, Tetrafluoroborsäure, Flusssäure, Methansulfonsäure, Weinsäure und deren Alkali- und Ammoniumsalze, Citronensäure und deren Alkali- und Ammoniumsalze, Ammonium- und Alkalipyrophosphate, Phosphonsäure und deren Alkali- und Ammoniumsalze, 2,2-Ethylendithiodiethanol, Hydantion und dessen Derivate, Succinimid und dessen Derivate, Phenol - und Kresolsulfonsäuren, in einer Gesamtkonzentration zwischen 0,1 mol/l und 2 mol/l.

Mögliche Oxidationsinhibitoren in cyanidfreien Elektrolyten sind: Resorcin, Hydrochinon, Brenzkatechin, Pyrogallol, Formaldehyd, Methanol, in einer Gesamtkonzentration zwischen 0,03 mol/l und 0,3 mol/l.

Mögliche Additive sind: Phenolphthalein, Thioverbindungen und deren Derivate, Thioharnstoff und dessen Derivate, Alpha- oder Beta-Naphtol und deren Ethoxylate, Alpha- und Beta-Naphtholsulphonsäure und deren Ethoxylate, o-Toluidin, Hydroxychinolin, Ligninsulfonat, Butindiol, in einer Gesamtkonzentration zwischen 0,0005 mol/l und 0,05 mol/l, bevorzugt 0,002 mol/l und 0,02 mol/l und Gelatine, Leim, nichtionische und kationische Tenside, Aminoverbindungen, beispielsweise C8-C20-amidopropylamine und deren Derivate, Polyethylenglycol und dessen funktionalisierte Derivate, Pepton, Glycin, in einer Gesamtkonzentration zwischen 0 g/l- 50 g/l.

Es können jeweils auch Mischungen aus den voranstehend genannten Bestandteilen der Elektrolyte verwendet werden, also z.B. zumindest zwei Salze eines bzw. des jeweiligen Metalls und/oder zumindest zwei Stabilisatoren und/oder zumindest zwei Oxidationsinhibitoren und/oder zumindest zwei Additive.

Zu beachten ist, dass aus Sicherheitsgründen cyanidhältige Elektrolyte nur aus alkalischen Salzen oder Vormischungen hergestellt werden dürfen.

Die Legierungselemente können in Form der oben genannten, löslichen Verbindungen oder Komplexe einem entsprechenden Elektrolyten zugesetzt und aus diesem mit abgeschieden werden. Ebenso ist eine Legierungsbildung durch Eindiffusion der Elemente in die Schicht oder Mitabscheidung von im Elektrolyten suspendierten Partikeln möglich.

Die Abscheidung der jeweiligen Antifrettingschicht 5 kann auf einem bereits vorgeformten Mehrschichtgleitlager 1 erfolgen, also z.B. auf einer Gleitlagerhalbschale. Ebenso ist es im Rahmen der Erfindung möglich, dass die Antifrettingschicht 5 auf einem eben Substratstreifen, beispielsweise einem Stahlstreifen, abgeschieden wird, und die mechanische Umformung zum fertigen Mehrschichtgleitlager 1, beispielsweise durch Pressen, etc., erst in einem daran anschließenden Herstellungsschritt durchgeführt wird.

Die Antifrettingschicht kann auch nach Auftragung einer Zwischenschicht bzw. Haftvermittlungsschicht, beispielsweise aus Kupfer oder Nickel, auf dem Substrat aufgetragen werden. Solche Zwischenschichten weisen üblicherweise eine Dicke von 0 $\mu$m - 4 $\mu$m, bevorzugt 0 $\mu$m - 2 $\mu$m auf. Ebenso ist die Ausführung der Antifrettingschicht als Mehrfachschicht mit unterschiedlichen Zusammensetzungen oder als Gradientenschicht möglich. Im Fall einer Gradientenschicht kann ein Konzentrationsgradient für Kupfer ausgebildet werden, wobei die Konzentration an Kupfer an der Grenzschicht zur Stützschicht 2 in der Antifrettingschicht 5 am größten ist. Der Gradient kann linear oder nichtlinear ausgebildet sein, ebenso besteht die Möglichkeit eines kontinuierlichen oder eines diskontinuierlichen Konzentrationsgradienten.

Es wurden auf diese Weise Antifrettingschichten 5 folgender Zusammensetzungen in Tabelle 1 hergestellt. Die Angaben zur Zusammensetzung beziehen sich dabei auf Gew.-%.

Tabelle 1: Zusammensetzungen von Antifrettingschichten 5

|    | Si | Ge | Sn | In | Zn | Ni | Co  | Bi | Pb | Sb | Cu   |
|----|----|----|----|----|----|----|-----|----|----|----|------|
| 1  | 2  |    |    |    |    | 2  |     |    |    |    | Rest |
| 2  | 5  |    |    | 2  |    |    |     |    |    |    | Rest |
| 3  |    | 4  |    |    | 5  |    |     |    |    |    | Rest |
| 4  |    | 10 |    |    |    |    |     |    |    |    | Rest |
| 5  |    | 15 |    | 1  |    | 5  |     |    |    |    | Rest |
| 6  |    |    | 10 | 3  |    |    |     |    |    |    | Rest |
| 7  |    |    | 15 | 2  |    |    |     |    |    |    | Rest |
| 8  |    |    | 20 |    | 3  |    |     |    |    |    | Rest |
| 9  |    |    | 10 |    | 5  |    | 0,5 |    |    |    | Rest |
| 10 |    |    | 13 |    | 1  |    |     |    |    |    | Rest |
| 11 |    |    | 10 |    | 1  |    |     |    | 10 |    | Rest |
| 12 |    |    | 10 |    |    |    |     | 15 |    |    | Rest |
| 13 |    |    | 5  |    | 5  |    |     |    | 15 |    | Rest |
| 14 |    |    | 5  |    |    |    |     |    |    | 2  | Rest |
| 15 |    | 2  | 10 |    |    |    |     |    |    |    | Rest |
| 16 |    |    | 17 |    | 2  |    |     | 10 |    |    | Rest |
| 17 |    |    | 12 |    |    |    |     |    | 9  |    | Rest |
| 18 | 1  | 2  | 5  |    | 5  |    |     |    |    |    | Rest |
| 19 |    |    | 11 | 3  |    |    |     |    |    |    | Rest |
| 20 |    |    | 24 |    |    |    | 5   |    |    |    | Rest |

Für Vergleichszwecke wurden weiters folgende CuSn-Legierungen hergestellt, wobei in Tabelle 2 die Beispiele 21 bis 24 eine Antifrettingschicht entsprechend der GB 2315301 A1 auf Stahl und die Beispiele 25 bis 39 sowie 41 bis 44 erfindungsgemäße Antifrettingschichten 5 auf Stahl zeigen. Für das Beispiel 40 wurde dabei entsprechend der WO 02/48563 A1 eine CuSn6-Legierung auf ein Ti-Pleuel aufgebracht. Die Sn-Anteile in Tabelle 2 sind wiederum in Gew.-% angegeben. Den Rest auf 100 Gew.-% bildet jeweils Cu. Für die erfindungsgemäßen Beispiele 25 bis 39 wurden die CuSn-Legierungen aus einem cyanidhältigen Elektrolyt, jene der Beispiele 41 bis 44 aus einem cyanidfreien Elektrolyt abgeschieden.

Tabelle 2: CuSn-Legierungen

| Nr. | Sn | Nr. | Sn | Nr. | Sn | Nr. | Sn |
|-----|-----|-----|------|-----|------|-----|-----|
| 21 | 11 | 27 | 17 | 33 | 10,8 | 39 | 9 |
| 22 | 8,4 | 28 | 12,5 | 34 | 16 | 40 | 6 |
| 23 | 15 | 29 | 9 | 35 | 10 | 41 | 10 |
| 24 | 13 | 30 | 10 | 36 | 18 | 42 | 12 |
| 25 | 12 | 31 | 13 | 37 | 15 | 43 | 14 |
| 26 | 14 | 32 | 15 | 38 | 16 | 44 | 16 |

Auf dem Prüfstand zeigte sich, dass die erfindungsgemäßen CuSn-Legierungen deutlich bessere Eigenschaften aufwiesen als die CuSn-Legierungen nach dem Stand der Technik. Es wurde dabei ein zylindrischer Stempel (die Gehäusebohrung darstellend) mit einem Druck von 10 MPa auf eine mit den entsprechenden Materialien beschichtete Platte (den Lagerrücken darstellend) gedrückt. Der Kontaktbereich wurde geölt. Stempel und Platte wurden einer Relativbewegung von 0,1 mm Amplitude bei einer Frequenz von 10 Hz ausgesetzt. Alle Versuche wurden bei 120°C über 1.000.000 Relativbewegungen durchgeführt. Nach Beendigung des Versuches wurden die Kontaktpunkte auf Platte und Stempel untersucht. Bei allen Proben bildete sich auf den Kontaktflächen Ölkohle. Der Grad der Schädigung wurde zwischen 1, keine Schädigung und 10, starker Frettingangriff eingestuft. Die Ergebnisse sind in Tabelle 3 zusammengefasst.

Tabelle 3: Prüfergebnisse zu den Beispielen 21 bis 44

| Nr. |  | Nr. |  | Nr. |  | Nr. |  |
|-----|----|-----|----|-----|----|-----|----|
| 21 | 10 | 27 | 5 | 33 | 3 | 39 | 3 |
| 22 | 8 | 28 | 5 | 34 | 2 | 40 | 6 |
| 23 | 9 | 29 | 2 | 35 | 4 | 41 | 3 |
| 24 | 7 | 30 | 2 | 36 | 3 | 42 | 3 |
| 25 | 3 | 31 | 4 | 37 | 2 | 43 | 4 |
| 26 | 2 | 32 | 3 | 38 | 3 | 44 | 4 |

Die Versuche wurden mit unterschiedlichen Stempelmaterialien (z.B. Stahl Gusseisen, Aluminium, Titan) und Oberflächenzuständen (Geschliffen, Kugelgestrahlt, etc.) und auch mit Platten ohne Beschichtung und mit unterschiedlichen Oberflächenzuständen durchgeführt, wobei sich die oben dargestellten Ergebnisse bestätigten. Auch die Versuchsparameter wie Pressung, Amplitude, Temperatur, Schmieröl wurden variiert. Die Ergebnisse wurden mit Ergebnissen aus Motorenversuchen und Untersuchungsergebnissen an Teilen aus dem Feld korreliert. Mit erfindungsgemäßen Antifrettingschichten 5 im Vergleich zu den Schichten nach dem Stand der Technik konnte eine weitere, deutliche Verminderung der Schädigung durch Fretting erzielt werden kann.

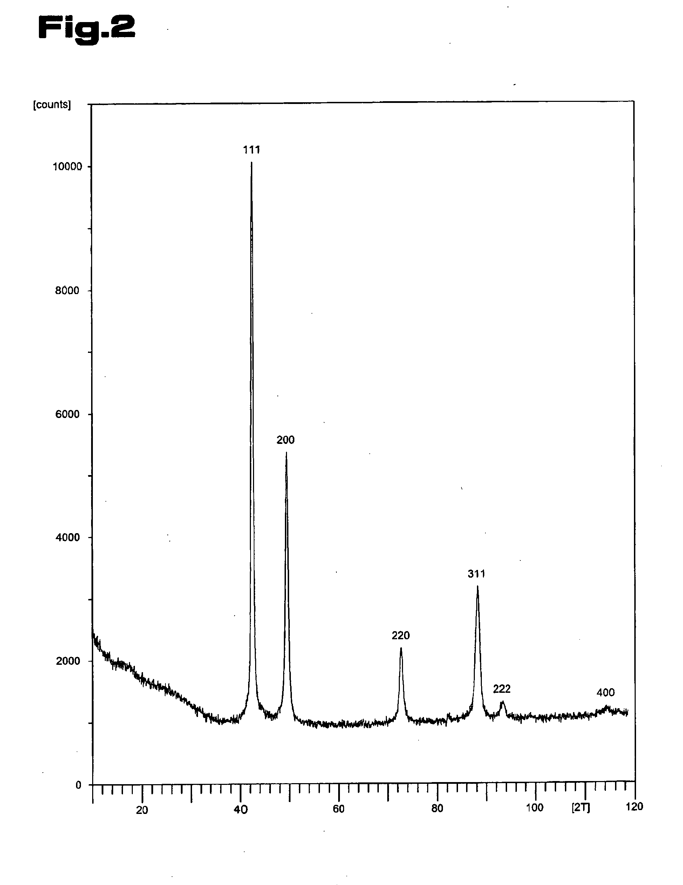

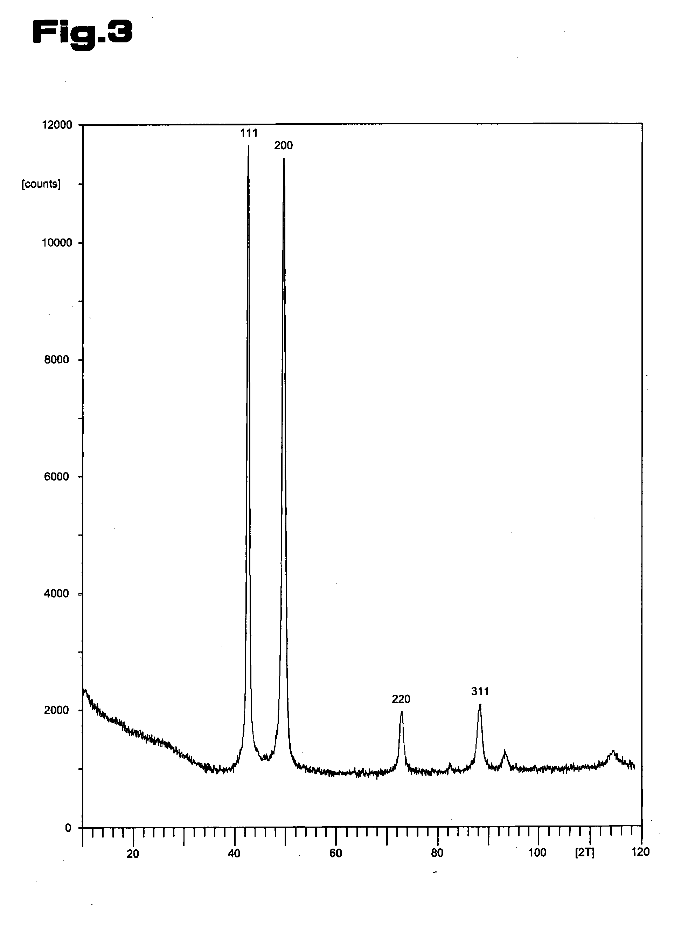

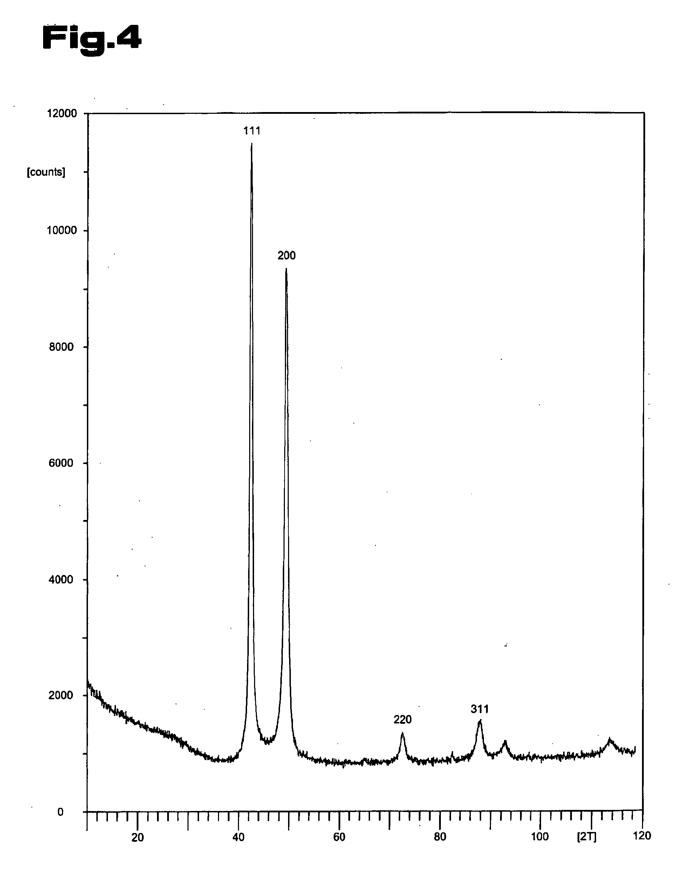

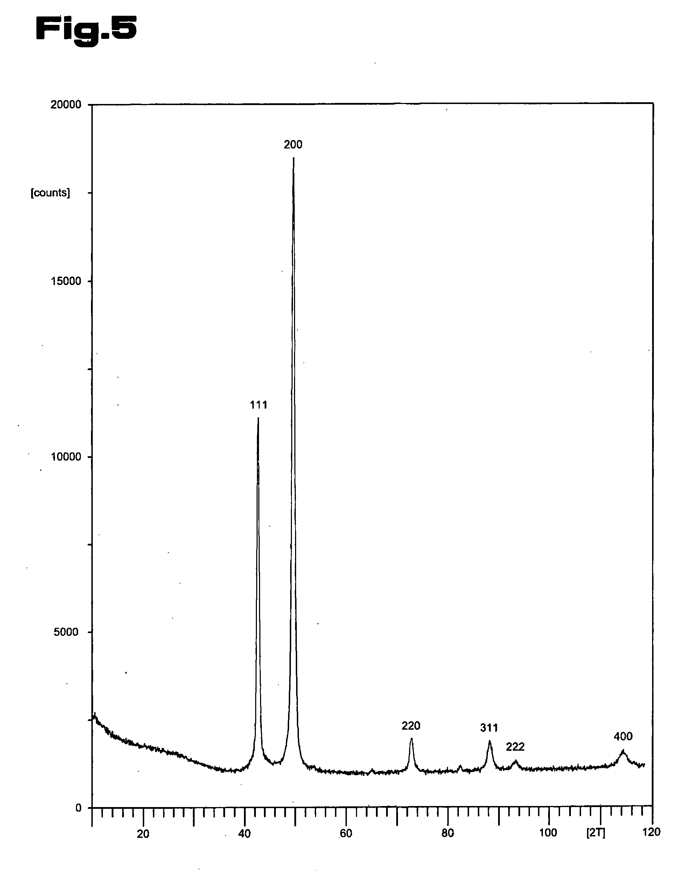

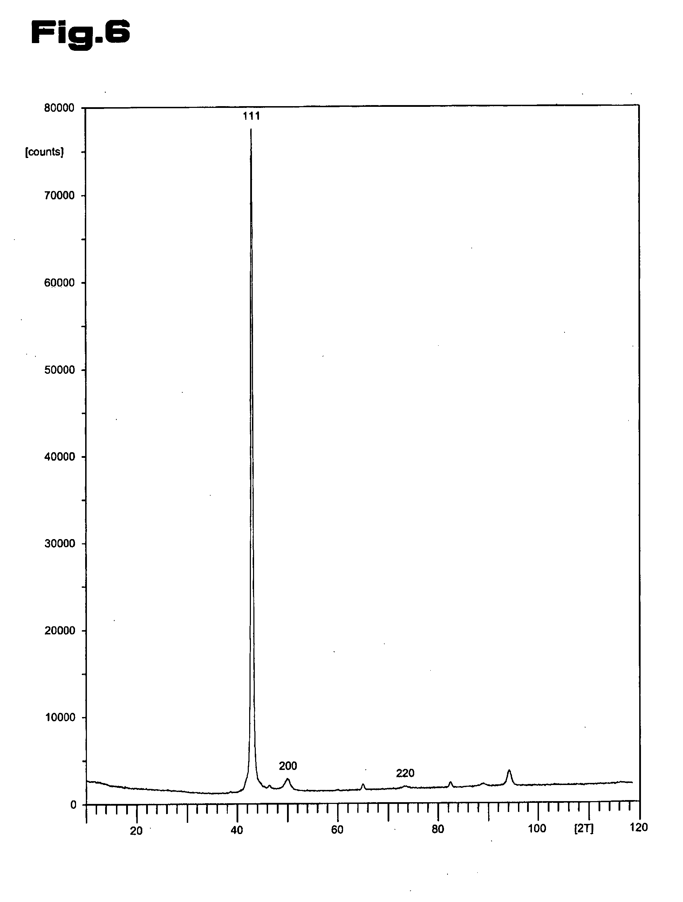

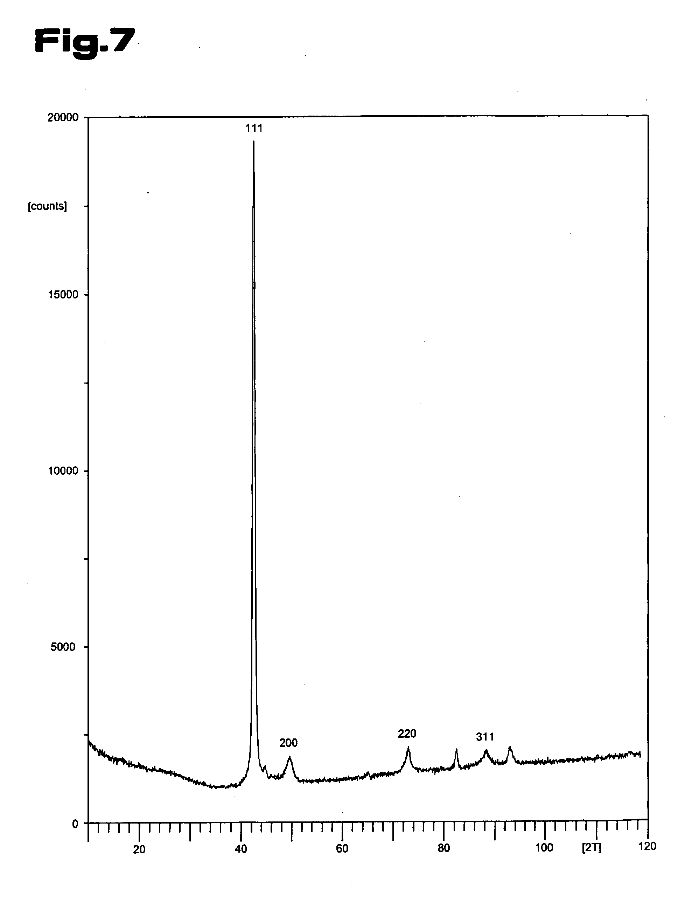

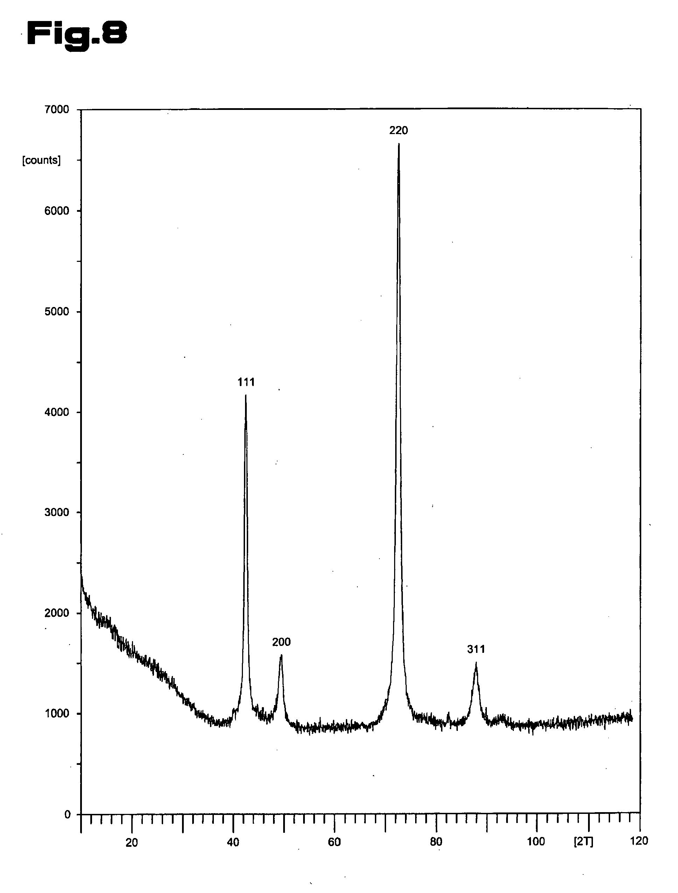

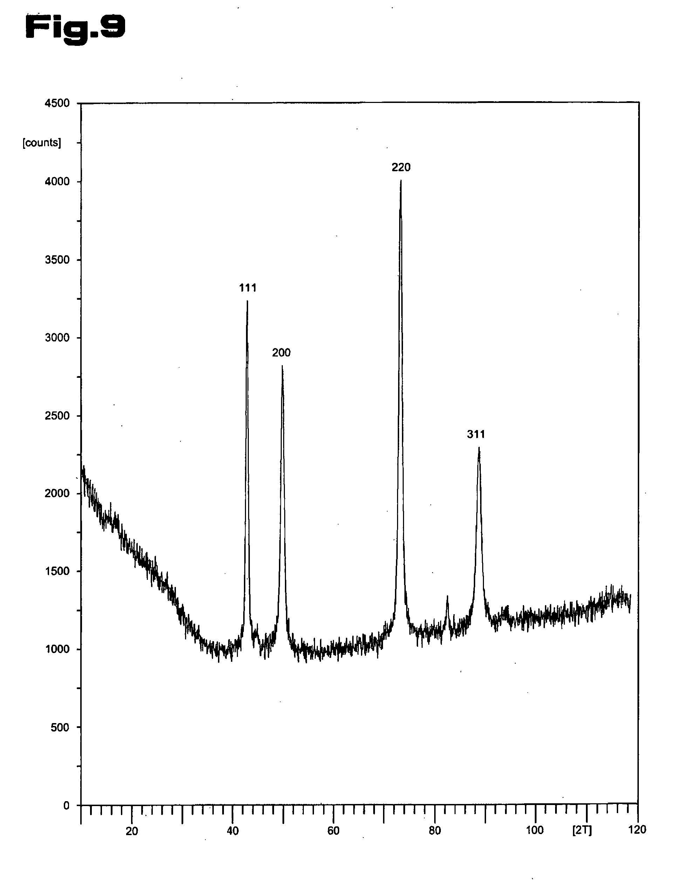

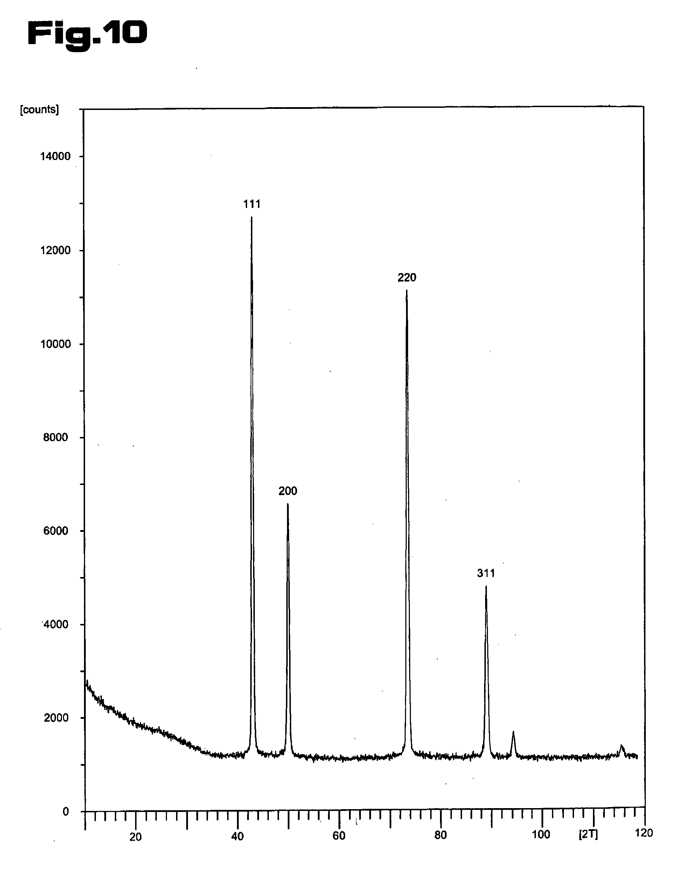

Um diese Unterschiede zu verifizieren wurde die Röntgenstruktur der Antifrettingschichten 5 untersucht. Die Fig. 2 bis 10 zeigen hierzu die Röntgendiffraktogramme der Beispiele 30 (Fig. 2), 35 (Fig. 3), 33 (Fig. 4), 31 (Fig. 5), 43 (Fig. 6), 42 (Fig. 7), 23 (Fig. 8), 22 (Fig. 9), 40 (Fig. 10). Auf die Wiedergabe der Röntgendiffraktogramme der übrigen Beispiele wurde verzichtet, da sie zum Verständnis der Erfindung nichts über die aus den Fig. 2 bis 10 gewonnenen Erkenntnissen hinausgehendes beitragen.

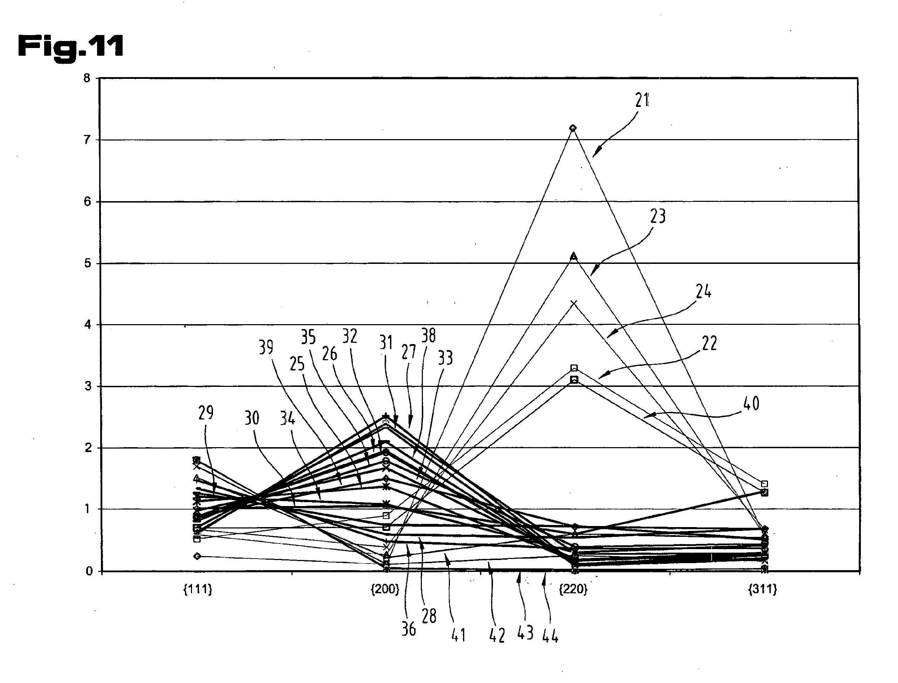

Obwohl diese Röntgendiffraktogramme im direkten Vergleich an sich schon aussagekräftig sind, wurde zum besseren Vergleich aus den relativen Intensitäten der Beugungsmuster der CuSn-Legierungen nach den Beispielen 21 bis 44 der Orientierungsindex der Kupfer-Mischkristall-Körner berechnet. Das Ergebnis ist in Fig. 11 grafisch aufgetragen und in Tabelle 3 numerisch wiedergegeben, wobei in Tabelle 4 auch die Werte für eine völlig unorientierte Cu-Pulver Probe wiedergegeben sind.

Die Berechnung der Orientierungsindeces erfolgt nach der Formel

$$M\{hkl\} = \frac{I\{hkl\}\sum I^0\{hkl\}}{I^0\{hkl\}\sum I\{hkl\}}$$

wobei I{hkl} die Röntgenbeugungsintensitäten für die {hkl} Netzebenen der Antifrettingschicht und I$^0${hkl} die Röntgenbeugungsintensitäten der völlig unorientierten Kupfer-Pulverprobe darstellen.

Tabelle 4: Orientierungsindices

| Beispiel | Relative Intensität I {hkl} | | | | | Orientierungsindex M {hkl} | | | |
|---|---|---|---|---|---|---|---|---|---|
| | {111} | {200} | {220} | {311} | Sum. | {111} | {200} | {220} | {311} |
| Cu-Pulver (00-004-0836) | 100 | 46 | 20 | 17 | 183,0 | 1 | 1 | 1 | 1 |
| | | | | | | | | | |
| 21 | 17,1 | 3,7 | 100 | 6,5 | 127,3 | 0,25 | 0,12 | 7,19 | 0,6 |
| 22 | 79,4 | 62,3 | 100 | 36,4 | 278,1 | 0,5 | 0,9 | 3,3 | 1,4 |
| 23 | 57,3 | 11,9 | 100 | 9,5 | 178,7 | 0,6 | 0,3 | 5,1 | 0,6 |
| 24 | 77,4 | 20,6 | 100 | 13 | 211,0 | 0,7 | 0,4 | 4,3 | 0,7 |
| 25 | 100 | 56 | 3,1 | 4 | 163,1 | 1,1 | 1,4 | 0,2 | 0,3 |
| 26 | 99,1 | 100 | 2,5 | 5,1 | 206,7 | 0,9 | 1,9 | 0,1 | 0,3 |
| 27 | 52,4 | 100 | 2 | 3,8 | 158,2 | 0,6 | 2,5 | 0,1 | 0,3 |
| 28 | 65,5 | 100 | 1,7 | 3,1 | 170,3 | 0,7 | 2,3 | 0,1 | 0,2 |
| 29 | 100 | 27 | 11,5 | 6,9 | 145,4 | 1,3 | 0,7 | 0,7 | 0,5 |
| 30 | 100 | 47,8 | 11,8 | 21,6 | 181,2 | 1,0 | 1,1 | 0,6 | 1,3 |
| 31 | 57,2 | 100 | 5,2 | 4,4 | 166,8 | 0,6 | 2,4 | 0,3 | 0,3 |
| 32 | 97,9 | 100 | 2,5 | 3,6 | 204,0 | 0,9 | 2,0 | 0,1 | 0,2 |
| 33 | 100,0 | 78,9 | 3,9 | 5,2 | 188,0 | 1,0 | 1,7 | 0,2 | 0,3 |
| 34 | 100,0 | 41,1 | 5,1 | 5,9 | 152,1 | 1,2 | 1,1 | 0,3 | 0,4 |
| 35 | 100,0 | 96,1 | 9,2 | 8,8 | 214,1 | 0,9 | 1,8 | 0,4 | 0,4 |
| 36 | 100,0 | 14,9 | 5,0 | 4,3 | 124,2 | 1,5 | 0,5 | 0,4 | 0,4 |
| 37 | 100,0 | 20,3 | 8,1 | 8,7 | 137,1 | 1,3 | 0,6 | 0,5 | 0,7 |
| 38 | 83,5 | 100,0 | 2,4 | 3,8 | 189,7 | 0,8 | 2,1 | 0,1 | 0,2 |
| 39 | 100,0 | 77,9 | 16,1 | 13,0 | 207,0 | 0,9 | 1,5 | 0,7 | 0,7 |
| 40 | 100,0 | 46,8 | 92,6 | 30,9 | 270,3 | 0,7 | 0,7 | 3,1 | 1,3 |
| 41 | 100,0 | 6,7 | 7,9 | 6,0 | 120,6 | 1,5 | 0,2 | 0,6 | 0,5 |
| 42 | 100,0 | 3,1 | 3,0 | 1,7 | 107,8 | 1,7 | 0,1 | 0,3 | 0,2 |
| 43 | 100 | 1,5 | 0,3 | 0,3 | 102,1 | 1,8 | 0,1 | 0,1 | 0,1 |
| 44 | 100 | 1 | 0,1 | 0,4 | 101,5 | 1,8 | 0,1 | 0,0 | 0,1 |

In Fig. 11 sind die jeweiligen Orientierungsindices für die einzelnen Netzebenenscharen aus Tabelle 4 auf der Ordinate und die zugehörigen Netzebenenscharen auf der Abszisse aufgetragen. Wie aus Fig. 11 ersichtlich ist, zeigen die Proben nach dem Stand der Technik entsprechen den Verläufen 21 bis 24 und 40 eine deutliche Ausprägung des Orientierungsindex M {220}. Zum Unterschied dazu tritt M {220} bei den erfindungsgemäßen Proben im Vergleich zu M {200} deutlich in den Hintergrund. Erfindungsgemäß weist jede der Netzebenenscharen {hkl} einen Wert von kleiner 2,75 auf, insbesondere der Orientierungsindex des {220} Reflexes unterschreitet. Vorzugsweise beträgt die Röntgenbeugungsintensität der {200}-Netzebenen zwischen 50 % und 200 % der Röntgenbeugungsintensität der {111}-Netzebenen, bzw. beträgt die Summe der Röntgenbeugungsintensität von I{111} und I{200} zumindest 70%, bevorzugt zumindest 80%, der gesamten Röntgenbeugungsintensität.

Aus Fig. 11 ist weiters ersichtlich, dass bei aus cyanidfreien Elektrolyten abgeschiedenen CuSn-Legierungen der Orientierungsindex M {200} deutlich kleiner ist als bei aus cyanidhältigen Elektrolyten abgeschiedenen CuSn-Legierungen, hingegen der Orientierungsindex M {111} einen größeren Wert annimmt. Diese cyanidfreien Elektrolyten haben alle zumindest eine organische Verbindung entsprechend voranstehenden Angaben enthalten. In einer bevorzugten Ausführung der Antifrettingschicht 5 beträgt daher die Röntgenbeugungsintensität I{ 111} zumindest 70%, bevorzugt zumindest 85%, der gesamten Röntgenbeugungsintensität beträgt.

Ähnliche Ergebnisse zeigen Kupferbasislegierungen mit den bzw. zumindest einem der weiteren voranstehend genannten Legierungselemente(n) Si, Ge, In, Zn, Ni, Co, Bi, Pb und Sb, sodass auf die Wiedergabe dieser Ergebnisse verzichtet wurde, um den Rahmen der Beschreibung nicht zu sprengen.

Gemäß einer bevorzugten Ausführungsvariante der Antifrettingschicht 5 weist diese eine Schichtdicke zwischen 2 $\mu$m und 100 $\mu$m, bevorzugt zwischen 3 $\mu$m und 30 $\mu$m, insbesondere zwischen 4 $\mu$m und 15 $\mu$m auf, wie dies bereits voranstehend ausgeführt wurde.

Wie bereist voranstehend ausgeführt, weist die Antifrettingschicht 5 eine Schichtdicke von mindestens 50 %, insbesondere mindestens 150 %, und maximal 1000 %, bevorzugt maximal 300 %, der Rauhigkeit Rz der Stützschicht bzw. einer gegebenenfalls zwischen der Stützschicht und der Antifrettingschicht angeordneten Zwischenschicht auf.

Insbesondere weist die Antifrettingschicht 5 aus voranstehend genannten Gründen eine Mikrohärte nach Vickers bei einer Prüflast von 3 Pond zwischen HV 200 und HV 500, bevorzugt zwischen HV 230 und HV 400, insbesondere zwischen HV 250 und HV 350, auf.

Auswertungen von Schliffbildern haben gezeigt, dass eine Verbesserung der Eigenschaften der Antifrettingschicht 5 auftritt, wenn die Kupfer-Mischkristall-Körner eine Korngröße von größer 5 nm, bevorzugt von größer 10 nm, insbesondere von größer 50 nm, aufweisen.

XRD-Messungen der Antifrettingschicht 5 haben zudem gezeigt, dass Kupferbasislegierungen bessere Eigenschaften aufweisen, wenn diese im Wesentlichen frei von intermetallischen Phasen sind und als Mischkristall mit Kupfer-Kristallgitter erscheint, wobei besonders bevorzugt ist, wenn diese Kupferbasislegierungen aus Kupfer-Mischkristallen mit einer Gitterkonstante zwischen 0,3630 nm und 0,3750 nm bestehen.

Die Antifrettingschicht 5 kann zudem aus voranstehenden Gründen eine Beschichtung aufweisen, die weicher ist als die Antifrettingschicht 5, wobei die Beschichtung bevorzugt aus einem Werkstoff besteht, der ausgewählt ist aus einer Gruppe umfassend Zinn, Blei, Silber, Bismut, polymerbasierte Gleitlacke. Prinzipiell sind sämtliche Gleitlacke verwendbar, die im Bereich von Gleitlagern bekannt sind. Bevorzugt wird jedoch ein Gleitlack verwendet, der in trockenem Zustand aus 40 Gew.-% bis 45 Gew.-% MoS2, 20 Gew.-% bis 25 Gew.-% Graphit und 30 Gew.-% bis 40 Gew.-% Polyamidimid besteht, wobei gegebenenfalls noch Hartpartikel, wie z.B. Oxide, Nitride oder Carbide, im dem Gleitlack in einem Anteil von in Summe maximal 20 Gew.-% enthalten sein können, die einen Anteil der Festschmierstoffe ersetzen.

Der Ordnung halber sei abschließend darauf hingewiesen, dass zum besseren Verständnis des Aufbaus Mehrschichtgleitlagers 1 dieses bzw. dessen Bestandteile teilweise unmaßstäblich und/oder vergrößert und/oder verkleinert dargestellt wurden.

**Bezugszeichenaufstellung**

1 Mehrschichtgleitlager
2 Stützschicht
3 Gleitschicht
4 Vorderseite
5 Antifrettingschicht

6 Rückseite
7 Lagermetallschicht

21 Verlauf
22 Verlauf
23 Verlauf
24 Verlauf
25 Verlauf

26 Verlauf

| 27 | Verlauf |
|----|---------|
| 28 | Verlauf |
| 29 | Verlauf |
| 30 | Verlauf |
| 31 | Verlauf |
| 32 | Verlauf |
| 33 | Verlauf |
| 34 | Verlauf |
| 35 | Verlauf |
| 36 | Verlauf |
| 37 | Verlauf |
| 38 | Verlauf |
| 39 | Verlauf |
| 40 | Verlauf |
| 41 | Verlauf |
| 42 | Verlauf |
| 43 | Verlauf |
| 44 | Verlauf |

**Patentansprüche**

1. Antifrettingschicht (5) für ein Mehrschichtgleitlager (1) bestehend aus einer Kupferbasislegierung, die neben Kupfer als Hauptlegierungselement zumindest ein Element aus der Gruppe Germanium, Zinn, Indium, Zink, Nickel, Kobalt, Wismut, Blei, Silber, Anti-mon sowie aus der Herstellung stammende unvermeidbare Verunreinigungen enthält, wobei der Summenanteil dieser Legierungselemente mindesten 1 Gew.-% und maximal 30 Gew.-% beträgt, und wobei in der Kupferlegierung aus Kupfer und dem zumindest einem Element gebildete Kupfer-Mischkristall-Körner vorliegen, **dadurch gekennzeichnet, dass** die Kupfer-Mischkristall-Körner in der Art orientiert sind, dass ein Orientierungsindex M{hkl} gemäß der Formel

$$M\{hkl\} = \frac{I\{hkl\}\sum I^0\{hkl\}}{I^0\{hkl\}\sum I\{hkl\}}$$

jede der Netzebenenscharen {hkl} einen Wert von kleiner 3,0 aufweist, wobei I{hkl} die Röntgenbeugungsintensitäten für die {hkl} Netzebenen der Antifrettingschicht und $I^0${hkl} die Röntgenbeugungsintensitäten der völlig unorientierten Kupfer-Pulverprobe darstellen.

2. Antifrettingschicht (5) nach Anspruch 1, **dadurch gekennzeichnet, dass** der Orientierungsindex des {220} Reflexes den Wert 1,0 unterschreitet.

3. Antifrettingschicht (5) nach Anspruch 1 oder 2, **dadurch gekennzeichnet, dass** die Röntgenbeugungsintensität der {200}-Netzebenen zwischen 50 % und 200 % der Röntgenbeugungsintensität der {111}-Netzebenen beträgt.

4. Antifrettingschicht (5) nach einem der Ansprüche 1 bis 3, **dadurch gekennzeichnet, dass** die Summe der Röntgenbeugungsintensität von I{111} und I{200} zumindest 70%, bevorzugt zumindest 80%, der gesamten Röntgenbeugungsintensität beträgt.

5. Antifrettingschicht (5) nach einem der Ansprüche 1 bis 4, **dadurch gekennzeichnet, dass** die Röntgenbeugungsintensität I{111} zumindest 70%, bevorzugt zumindest 85%, der gesamten Röntgenbeugungsintensität beträgt.

6. Antifrettingschicht (5) nach einem der Ansprüche 1 bis 5, **dadurch gekennzeichnet, dass** der Zinngehalt zwischen 5 Gew.-% und 25 Gew.-%, bevorzugt zwischen 8 Gew.-% und 19 Gew.-%, insbesondere zwischen 10 Gew.-% und 16 Gew.-%, beträgt.

**7.** Antifrettingschicht (5) nach einem der Ansprüche 1 bis 6, **dadurch gekennzeichnet, dass** der Zinkgehalt zwischen 0,5 Gew.-% und 25 Gew.-%, bevorzugt zwischen 1 Gew.-% und 5 Gew.-%, beträgt.

**8.** Antifrettingschicht (5) nach einem der Ansprüche 1 bis 7, **dadurch gekennzeichnet, dass** der Gehalt an einem oder mehreren der Elemente Germanium, Indium, Zink, Nickel, Kobalt, Wismut, Blei, Silber und Antimon in Summe zwischen 0,2 Gew.-% und 20 Gew.-% beträgt.

**9.** Antifrettingschicht (5) nach einem der Ansprüche 1 bis 8, **dadurch gekennzeichnet, dass** diese eine Schichtdicke zwischen 2 $\mu$m und 100 $\mu$m, bevorzugt zwischen 3 $\mu$m und 30 $\mu$m, insbesondere zwischen 4 $\mu$m und 15 $\mu$m aufweist.

**10.** Antifrettingschicht (5) nach einem der Ansprüche 1 bis 9, **dadurch gekennzeichnet, dass** diese eine Mikrohärte nach Vickers bei einer Prüflast von 3 Pond zwischen HV 200 und HV 500, bevorzugt zwischen HV 230 und HV 400, insbesondere zwischen HV 250 und HV 350, aufweist.

**11.** Antifrettingschicht (5) nach einem der Ansprüche 1 bis 10, **dadurch gekennzeichnet, dass** die Kupfer-Mischkristall-Körner eine Korngröße von größer 5 nm, bevorzugt von größer 10 nm, insbesondere von größer 50 nm, aufweisen.

**12.** Antifrettingschicht (5) nach einem der Ansprüche 1 bis 11, **dadurch gekennzeichnet, dass** diese im Wesentlichen frei von intermetallischen Phasen ist und in der XRD-Messung als Mischkristall mit Kupfer-Kristallgitter erscheint.

**13.** Antifrettingschicht (5) nach Anspruch 12, **dadurch gekennzeichnet, dass** diese aus Kupfer-Mischkristallen mit einer Gitterkonstante zwischen 0,3630 nm und 0,3750 nm besteht.

**14.** Mehrschichtgleitlager (1) mit einer, einem zum lagernden Element zuwendbaren Vorderseite (4) und einer dieser gegenüberliegenden Rückseite (6), umfassend eine Stützschicht (2), eine auf der Vorderseite (4) angeordnete Gleitschicht (3) sowie eine auf der Rückseite (6) angeordnete Antifrettingschicht (5), **dadurch gekennzeichnet, dass** die Antifrettingschicht (5) entsprechend einem der vorhergehenden Ansprüche gebildet ist.

**15.** Mehrschichtgleitlager (1) nach Anspruch 14, **dadurch gekennzeichnet, dass** die Antifrettingschicht (5) eine Schichtdicke von mindestens 50 %, bevorzugt mindestens 50 %, insbesondere mindestens 150 %, und maximal 1000 %, bevorzugt maximal 300 %, der Rauhigkeit Rz der Stützschicht (5) bzw. einer gegebenenfalls zwischen der Stützschicht (2) und der Antifrettingschicht (5) angeordneten Zwischenschicht aufweist.

**16.** Mehrschichtgleitlager (1) nach Anspruch 14 oder 15, **dadurch gekennzeichnet, dass** die Antifrettingschicht (5) eine Beschichtung aufweist, die weicher ist als die Antifrettingschicht (5).

**17.** Mehrschichtgleitlager (1) nach Anspruch 16, **dadurch gekennzeichnet, dass** die Beschichtung aus einem Werkstoff besteht, der ausgewählt ist aus einer Gruppe umfassend Zinn, Blei, Wismut, Silber, polymerbasierte Gleitlacke.

**18.** Verfahren zur galvanischen Abscheidung einer Antifrettingschicht (5) nach Anspruch 1 auf dem Rücken einer Stützschicht eines Mehrschichtgleitlager (1), wobei die Antifrettingschicht (5) aus einer Kupferlegierung hergestellt wird, die neben Kupfer als Hauptlegierungselement zumindest ein Element aus der Gruppe Germanium, Zinn, Indium, Zink, Nickel, Kobalt, Wismut, Blei, Silber, Antimon sowie aus der Herstellung stammende unvermeidbare Verunreinigungen enthält, wobei der Summenanteile dieser Legierungselemente mindestens 1 Gew.-% und maximal 30 Gew.-% beträgt und in Form von Salzen im Elektrolyt eingesetzt werden, wobei die Abscheidung der Antifrettingschicht (5) bei einer Temperatur unterhalb von 85 °C und bei einer maximalen Stromdichte von 6 A/dm$^2$ durchgeführt wird, **dadurch gekennzeichnet, dass** der Elektrolyt neben den Salzen für die abzuscheidenden Metalle auch organische Verbindungen ausgewählt aus einer Gruppe umfassend Polycarbonsäuresalze, Naphthol; Naphtholderivate, Thioverbindungen enthält.

**Claims**

**1.** Anti-fretting layer (5) for a multi-layered plain bearing (1) consisting of a copper-based alloy, which in addition to copper as the main alloy element contains at least one from the group germanium, tin, indium, zinc, nickel, cobalt, bismuth, lead, silver, antimony as well as unavoidable impurities originating from production, the total proportion of these alloys elements being at least 1 wt.% and a maximum of 30 wt.%, and in the copper alloy there are copper mixed crystal grains formed from copper and the at least one element, **characterized in that** the copper mixed crystal grains are oriented in such a way that an orientation index M{hkl} according to the formula

$$M\left\{hkl\right\} = \frac{I\left\{hkl\right\}\sum I^{0}\left\{hkl\right\}}{I^{0}\left\{hkl\right\}\sum I\left\{hkl\right\}}$$

of each of the lattice plane sets {hkl} has a value of less than 3.0, with I{hkl} representing the X-ray diffraction intensities for the {hkl} lattice planes of the anti-fretting layer and 10 {hkl} representing the X-ray diffraction intensities of the completely unoriented copper powder sample.

2. Anti-fretting layer (5) as claimed in claim 1, **characterized in that** the orientation index of the {220} reflex falls below the value 1.0.

3. Anti-fretting layer (5) as claimed in claim 1 or 2, **characterized in that** the X-ray diffraction intensity of the {200} lattice planes is between 50 % and 200 % of the X-ray dif-fraction intensity of the {111} lattice planes.

4. Anti-fretting layer (5) as claimed in one of claims 1 to 3, **characterized in that** the sum of the X-ray diffraction intensity of I{111} and I{200} is at least 70%, preferably at least 80%, of the total X-ray diffraction intensity.

5. Anti-fretting layer (5) as claimed in one of claims 1 to 4, **characterized in that** the X-ray diffraction intensity I{111} is at least 70%, preferably at least 85%, of the total X-ray diffraction intensity.

6. Anti-fretting layer (5) as claimed in one of claims 1 to 5, **characterized in that** the tin content is between 5 wt.% and 25 wt.%, preferably between 8 wt.% and 19 wt.%, in par-ticular between 10 wt.% and 16 wt.%.

7. Anti-fretting layer (5) as claimed in one of claims 1 to 6, **characterized in that** the zinc content is between 0.5 wt. % and 25 wt.%, preferably between 1 wt.% and 5 wt.%.

8. Anti-fretting layer (5) as claimed in one of claims 1 to 7, **characterized in that** the content of one or more of the elements germanium, indium, zinc, nickel, cobalt, bismuth, lead, silver and antimony in total is between 0.2 wt.% and 20 wt.%.

9. Anti-fretting layer (5) as claimed in one of claims 1 to 8, **characterized in that** the latter has a layer thickness of between 2 μm and 100 μm, preferably between 3 μm and 30 μm, in particular between 4 μm and 15 μm.

10. Anti-fretting layer (5) as claimed in one of claims 1 to 9, **characterized in that** the latter has a Vickers microhardness in a test load of 3 Pond of between HV 200 and HV 500, preferably between HV 230 and HV 400, in particular between HV 250 and HV 350.

11. Anti-fretting layer (5) as claimed in one of claims 1 to 10, **characterized in that** the copper mixed crystal grains have a grain size of more than 5 nm, preferably more than 10 nm, in particular more than 50 nm.

12. Anti-fretting layer (5) as claimed in one of claims 1 to 11, wherein the latter is essentially free of intermetallic phases and appears in the XRD measurement as a mixed crys-tal with a copper crystal lattice.

13. Anti-fretting layer (5) as claimed in claim 12, **characterized in that** the latter con-sists of copper mixed crystals with a lattice constant of between 0.3630 nm and 0.3750 nm.

14. Multi-layered plain bearing (1) comprising a front side (4) which can face to-wards the element to be supported and a rear side (6) opposite the latter, comprising a support layer (2), an anti-frictional layer (3) arranged on the front side (4) and an anti-fretting layer (5) arranged on the rear side (6), **characterized in that** the anti-fretting layer (5) is formed accord-ing to any one of the preceding claims.

15. Multi-layered plain bearing (1) as claimed in claim 14, **characterized in that** the anti-fretting layer (5) has a layer thickness of at least 50 %, preferably at least 50 %, in partic-ular at least 150 %, and a maximum of 1,000 %, preferably a maximum of 300 %, of the roughness Rz of the support layer (5) or an intermediate layer arranged if necessary between the support layer (2) and the anti-fretting layer (5).

16. Multi-layered plain bearing (1) as claimed in claim 14 or 15, **characterized in that** the anti-fretting layer (5) has a coating which is softer than the anti-fretting layer (5).

17. Multi-layered plain bearing (1) as claimed in claim 16, **characterized in that** the coating is made of a material which is selected from a group comprising tin, lead, bismuth, silver, polymer-based antifrictional paints.

18. Method for the galvanic deposition of an anti-fretting layer (5) according to claim 1 on the back of a support layer of a multi-layered plain bearing (1), the anti-fretting layer (5) being made from a copper alloy, which in addition to copper as the main alloy ele-ment contains at least one element from the group germanium, tin, indium, zinc, nickel, cobalt, bismuth, lead, silver, antimony as well as unavoidable impurities originating from production, the sum total of said alloy elements being at least 1 wt.% and a maximum of 30 wt.% and used in the form of salts in the electrolyte, the deposition of the anti-fretting layer (5) being performed at a temperature of below 85 °C and at a maximum current density of 6 A/dm$^2$, **characterized in that** the electrolyte contains in addition to the salts for the metals to be depos-ited organic compounds selected from a group comprising polycarboxylic acid salts, naphthol, naphthol derivatives, thio compounds.

**Revendications**

1. Couche anti-fretting (5) pour un palier de glissement multicouche (1), constitué d'un alliage à base de cuivre qui contient, en plus du cuivre en tant qu'élément principal de l'alliage, un élément choisi parmi le groupe suivent : germanium, étain, indium, zinc, nickel, cobalt, bismuth, plomb, argent, antimoine ainsi que des impuretés inévitables provenant de la fabrication, la part totale de ces éléments de l'alliage représentant au moins 1% en poids et au plus 30% en poids, et des grains de cristaux mixtes de cuivre, constitués de cuivre et d'au moins un élément étant présents dans l'alliage de cuivre, **caractérisée en ce que** les grains de cristaux mixtes de cuivre sont orientés de façon à ce qu'un indice d'orientation M {hkl} selon la formule

$$M \left\{ hkl \right\} = \frac{I \left\{ hkl \right\} \sum I^{0} \left\{ hkl \right\}}{I^{0} \left\{ hkl \right\} \sum I \left\{ hkl \right\}}$$

de chacun des ensembles de plans cristallins {hkl} présente une valeur inférieure à 3,0, I{hkl} représentant les intensités de diffraction des rayons X pour les plans cristallins {hkl} de la couche anti-fretting et 10{hkl} les intensités de diffraction des rayons X pour l'échantillon de poudre de cuivre entièrement non orientée.

2. Couche anti-fretting (5) selon la revendication 1, **caractérisée en ce que** l'indice d'orientation du réflex {220} est inférieur à la valeur 1,0.

3. Couche anti-fretting (5) selon la revendication 1 ou 2, **caractérisée en ce que** l'intensité de diffraction des rayons X des plans cristallins {200} représente entre 50% et 100% de l'intensité de diffraction des rayons X des plans cristallins 111} .

4. Couche anti-fretting (5) selon l'une des revendications 1 à 3, **caractérisée en ce que** la somme des intensités de diffraction des rayons X de I{111} et I{200} représente au moins 70%, de préférence au moins 80%, de l'intensité totale de diffraction des rayons X.

5. Couche anti-fretting (5) selon l'une des revendications 1 à 4, **caractérisée en ce que** l'intensité de diffraction des rayons X I{111} représente au moins 70%, de préférence au moins 85%, de l'intensité totale de diffraction des rayons X.

6. Couche anti-fretting (5) selon l'une des revendications 1 à 5, **caractérisée en ce que** la teneur en étain se situe entre 5% en poids et 25% en poids, de préférence entre 8% en poids et 19% en poids, plus particulièrement entre 10% en poids et 16% en poids.

**7.** Couche anti-fretting (5) selon l'une des revendications 1 à 6, **caractérisée en ce que** la teneur en zinc se situe entre 0,5% en poids et 25% en poids, de préférence entre 1 % en poids et 5% en poids.

**8.** Couche anti-fretting (5) selon l'une des revendications 1 à 7, **caractérisée en ce que** la teneur totale en un ou plusieurs des éléments germanium, indium, zinc, nickel, cobalt, bismuth, plomb, argent et antimoine se situe entre 0,2% en poids et 20% en poids.

**9.** Couche anti-fretting (5) selon l'une des revendications 1 à 8, **caractérisée en ce que** celle-ci présente une épaisseur située entre 2 $\mu$m et 100 $\mu$m, de préférence entre 3 $\mu$m et 30 $\mu$m, plus particulièrement entre 4 $\mu$m et 15 $\mu$m.

**10.** Couche anti-fretting (5) selon l'une des revendications 1 à 9, **caractérisée en ce qu'**une micro-dureté Vickers est située, dans le cas d'une charge d'essai de 3 livres, entre HV 200 et HV 500, de préférence entre HV 230 et HV 400, plus particulièrement entre HV 250 et HV 350.

**11.** Couche anti-fretting (5) selon l'une des revendications 1 à 10, **caractérisée en ce que** les grains de cristaux mixtes de cuivre présentent une taille supérieure à 5 nm, de préférence supérieure à 10 nm, plus particulièrement supérieure à 50 nm.

**12.** Couche anti-fretting (5) selon l'une des revendications 1 à 11, **caractérisée en ce que** celle-ci est globalement comme étant exempte de phase intermétalliques et apparaît, dans la mesure XRD, comme un cristal mixte avec une grille cristalline de cuivre.

**13.** Couche anti-fretting (5) selon la revendication 12, **caractérisée en ce que** celle-ci est constituée de cristaux mixtes de cuivre avec une constante de grille située entre 0,3630 nm et 0,3750 nm.

**14.** Palier de glissement multicouche (1) avec un côté avant (4) pouvant être orienté vers un élément à munir d'un palier et un côté arrière (6) opposé à celui-ci, comprenant une couche d'appui (2), une couche de glissement (3) disposée sur le côté avant (4) ainsi qu'une couche anti-fretting (5) disposée sur le côté arrière (6), **caractérisé en ce que** la couche anti-fretting (5) est conçue selon l'une des revendications précédentes.

**15.** Palier de glissement multicouche (1) selon la revendication 14, **caractérisé en ce que** la couche anti-fretting (5) présente une épaisseur d'au moins 50%, de préférence d'au moins 50%, plus particulièrement d'au moins 150% et au maximum de 1000%, de préférence au maximum de 300% de la rugosité Rz de la couche d'appui (2) ou d'une couche intermédiaire éventuellement disposée entre la couche d'appui (2) et la couche anti-fretting (5).

**16.** Palier de glissement multicouche (1) selon la revendication 14 ou 15, **caractérisé en ce que** la couche anti-fretting (5) est munie d'un revêtement plus souple que la couche anti-fretting (5).

**17.** Palier de glissement multicouche (1) selon la revendication 16, **caractérisé en ce que** le revêtement est constitué d'un matériau sélectionné dans le groupe suivant : étain, plomb, bismuth, argent, vernis de glissement à base de polymères.

**18.** Procédé d'isolation galvanique d'une couche anti-fretting (5) selon la revendication 1 sur l'arrière d'une couche d'appui d'un Palier de glissement multicouche (1), la couche anti-fretting (5) étant constituée d'un alliage de cuivre contenant, en plus du cuivre en tant qu'élément principal de l'alliage, au moins un élément sélectionné dans le groupe suivant : germanium, étain, indium, zinc, nickel, cobalt, bismuth, plomb, argent, antimoine ainsi que des impuretés inévitables provenant de la fabrication, les parts totales de ces éléments d'alliage représentant au moins 1 % en poids et au plus 30% en poids et étant utilisées sous forme de sels dans l'lyte, l'isolation galvanique de la couche anti-fretting (5) étant effectuée à une température inférieure à 85°C et avec une densité de courant maximale de 6 A/dm$^2$, **caractérisé en ce que** l'lyte contient, en plus des sels pour les métaux à séparer, des composés organiques sélectionnés dans un groupe comprenant des sels d'acides polycarboxyliques, du naphtol, des dérivés du naphtol, des composés thio.

# Fig.1

# Fig.2

# Fig.3

# Fig.4

# Fig.5

# Fig.6

# Fig.7

# Fig.8

# Fig.9

# Fig.10

# Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 506641 A1
- AT 399544 B
- GB 2315301 A1
- WO 0248563 A1
- GB 556248 A
- GB 554355 A